# EUROPEAN PATENT APPLICATION

(11) **EP 4 549 501 A1**
(43) Date of publication of application: **07.05.2025**
(21) Application number: 24176314.3
(22) Date of filing: 16.05.2024
(51) Int. Cl.: C08J 9/00, C08J 9/30, C08L 1/00, C08L 5/04, C08J 9/06

(54) **BIODEGRADABLE BIO-FOAM**

(30) Priority: 31.10.2023 NO 20231164
(71) Applicant: Agoprene AS, 3121 Nøtterøy (NO)
(72) Inventor: Nyrerød, Celine Natalie, 3121 Nøtterøy (NO)
(74) Representative: Bryn Aarflot AS

(57) **Abstract**

The invention relates to a biodegradable bio-foam and a method of manufacturing a biodegradable bio-foam, such as the claimed bio-foam. The foam provides a product comprising organic material that can be broken down naturally in compost or soil, or it can be used for bioenergy. The invention eliminates or reduces any reliance on fossil fuels and provides a bio-foam completely free of petrochemicals. The bio-foam may almost entirely be made of plant-based and/or renewable materials. The bio-foam may include green fillers, additives and structural components to replace petrochemical compounds.

## Description

### Technical Field

The present invention relates to a biodegradable bio-foam, a method for producing the biodegradable bio-foam, and an object comprising the biodegradable bio-foam.

### Background Art

The foam materials industry, catering to a diverse array of applications, is a substantial and vital sector facing significant environmental challenges. These challenges arise from the environmental impact of foam material production, waste disposal concerns, and the imperative to transition towards more sustainable alternatives.

Globally, the production of furniture foam materials alone accounts for 105 million tons of CO₂ emissions annually. The substantial emissions result from the heavy reliance on petroleum for making these materials. In particular, the global production of polyurethane-based foams, totaling 26 million metric tons, predominantly derives (90-88%) from petrochemicals. Petrochemicals represent only a small proportion of crude oil, yet their demand perpetuates the consumption of fossil fuels at large.

The production of petrochemicals heavily depends on fossil fuels both as feedstock and energy sources during material manufacturing. Consequently, the International Energy Agency highlights the potential for petrochemicals to emerge as a significant driver of oil demand growth throughout this decade. To achieve the goal of limiting global warming to 1.5°C, a substantial portion of fossil-fuel reserves must remain untapped. Given the example that an armchair emits an average of 43 kg of CO₂, almost half of which is due to furniture foam, it becomes evident that the foam industry is in need of alternative approaches to move away from petrochemicals in order to mitigate the negative environmental impact of this industry.

US2022/0185978A1 describes a biodegradable foam material made from cellulose ester polymer blended with a polyglyceride plasticizer and CaCO₃, chitosan or chitin as a nucleating agent, forming a closed cell foam suitable for packaging applications. CN 101003646A discloses a method for creating a low-manufacturing cost starch-based foamable biomaterial and biological foam products using a mixture of starch, thermoplastic polymer, nucleating agents, water, additives, and foaming agents, which are processed in a preheated screw extruder. US2022/0162413A1 describes a method for creating an expanded rigid foam with sealed pores, involving mixing anionic polymer, foaming agent, multivalent cations, and solvent, stirring to form foam, adding proton-releasing compound for gelation, and drying for foam with sealed pores. The expanded rigid foam may be used for applications such as in packages, horticultural containers, decorative objects, insulating, and other materials.

### Summary of invention

It is therefore an object of the present invention to provide alternative foam materials free of petrochemicals and methods to manufacture such foam materials sustainably.

The invention relates to a biodegradable bio-foam, a method of manufacturing said foam, and a novel use of said foam as indicated in the patent claims and detailed description.

In one aspect, the invention relates to a biodegradable bio-foam comprising:
A biodegradable bio-foam comprising:
   at least 80% by weight of bio-based and/or renewable materials, wherein the bio-based materials and/or renewable materials comprise at least one structural component, wherein the at least one structural component is a hydrocolloid; and
   up to 20% by weight of biogenic inorganic compounds,
   optionally one or more additives, wherein the additive comprises a green filler.

The invention provides a bio-foam product comprising at least 80% bio-based and/or renewable materials, with the remaining fraction comprising of biogenic inorganic compounds, which sets the invention apart from industrial polyurethane foams that heavily rely on petrochemicals. From 60 to 80% of the raw materials used in aspects of the invention are sourced from the sea, harvested with a focus on sustainability and striving for ecosystem preservation. The biodegradable bio-foam comprises organic material that can be broken down naturally in compost or soil, or it can be used for bioenergy. The invention eliminates or reduces any reliance on fossil fuels and provides a bio-foam completely free of petrochemicals.

In another aspect, the invention relates to a method for producing a biodegradable bio-foam, such as the bio-foam claimed, wherein the method comprises at least the following steps:
A. preparing a structural polymer-solvent mixture by mixing at least one structural component and a solvent;
B. preparing a pre-foaming mixture by mixing the structural polymer-solvent mixture with at least one additive;
C. heating the pre-foaming mixture and/or the structural polymer-solvent mixture to a temperature in the range of 30-70°C;
D. preparing a foaming mixture by adding to the pre-foaming mixture means of inducing mechanical and/or chemical foaming such as a foaming agent, a foam stabilizing agent, and/or mechanical stirring;
E. preparing a gelling mixture by providing at least one gelation-initiating agent to the foaming mixture;
F. setting the foam in a mold;
G. drying the foam; wherein
steps A-F comprise a wet phase, and step G comprises a dry phase.

A bio-foam of the invention may preferably be handmade in sustainable production facilities. A bio-foam of the invention may be machine-made. The invention allows for at least a 30% reduction in carbon footprint from cradle to gate when compared to conventional foam production methods.

A production process of the invention is separated into a wet phase and a dry phase, allowing for the reclamation of 40% of water effluent, which is subsequently reintegrated into our production cycle, thereby minimizing waste.

Over 90% of the energy utilized in a process of the invention is sourced from renewable sources, underlining our commitment to sustainable practices.

The invention provides a foam that can be used for instance for furniture padding, shoe padding, sound isolation, seat padding, headset padding, microphone padding and other applications wherein flexible polyurethane would normally be used. In aspects, the present invention relates to an object comprising the biodegradable bio-foam wherein the object is selected from the group comprising a furniture padding, a shoe padding, a material for sound isolation, a seat padding, a headset padding, and a microphone padding. Accordingly, the new bio-foam can replace polyurethane or other petrochemical-based materials.

The present invention offers a material that can be modified or customized to exhibit specific properties, allowing it to be either a flexible foam material akin to polyurethane or a rigid material similar to isoprene, depending on the preferences of the customer.

The invention includes both an open cell and a closed cell variant of the said bio-foam.

### Detailed description of the invention

Unless otherwise defined, all terms of art, notations and other scientific terms or terminology used herein are intended to have the meanings commonly understood by those of skill in the art to which this invention pertains. In some cases, terms with commonly understood meanings are defined herein for clarity and/or for ready reference, and the inclusion of such definitions herein should not necessarily be construed to represent a substantial difference over what is generally understood in the art.

The invention relates to a biodegradable bio-foam and a method for producing said foam.

The biodegradable bio-foam is at least partly a bio-based material, meaning it is a material comprising biological and/or renewable resources, as opposed to those derived from petroleum or fossil sources. The biological or renewable resources are typically plants or animals, preferably from marine plants or marine animals. In aspects, the biodegradable bio-foam may be a molded foam.

In aspects, the biodegradable bio-foam comprises at least 80% by weight of bio-based and/or renewable materials, such as 85% by weight, such as 90% by weight, such as 95% by weight, or such as 98% by weight.

The biodegradable bio-foam is biodegradable, meaning that it can be at least partly broken down naturally in compost or soil, or it can be used for bioenergy. Thus, the bio-foam can be broken down naturally by natural processes, especially by the action of living microorganisms like bacteria and fungi. As a result of the biodegradable property of the bio-foam disclosed herein, essential nutrients can be returned to the environment, alternatively the degradation products can be converted into bioenergy.

Foam materials are a class of materials including a cellular structure comprising gas-filled pockets or bubbles trapped within a solid matrix, wherein the solid matrix defines the cells. These gas-filled cells can be open, or interconnected, giving rise to open-cell foams. Alternatively, the gas-filled cells can be closed, or isolated, giving rise to closed-cell foams. Hence, the use of foam or bio-foam herein, refers to a material comprising a cellular structure with voids or gas-filled cells dispersed throughout a solid matrix, resulting in a lightweight and porous material. Depending on the structure of the gas-filled cells, the foam material can have different properties. Open-cell foams contain larger amount of air compared to closed-cell foams, which is reflected in the firmness of the foams. Open-cell foams are more compressible than closed-cell foams.

The solid matrix of the bio-foam defines the walls of the cells. The present invention relates to a biodegradable bio-foam, which is a polymer-based foam, more specifically a biopolymer-based foam. The solid matrix is typically made from a structural polymer as a result of a process referred to as gelation. Gelation is the transition of a liquid solution comprising structural polymers into a semi-solid or solid state, forming a network structure. Structural polymers possess long chain molecules with repeat units, and often contain side groups or functional groups on their backbone or side groups. As a result of their high molecular weight and chain-like structure, there are multiple points of interaction between polymer chains in the solution. Cross-linking of the structural polymers results in polymer matrix formation. Thus, the molecular structure of such polymers influences gelation and network formation.

The degradable bio-foam disclosed comprises at least one structural component, such as a structural polymer, wherein the at least one structural polymer is a hydrocolloid. In the bio-foam herein, the structural polymer is bio-based and/or from renewable materials. Hydrocolloids are water-soluble polymers that can form viscous dispersions or gels when dispersed in water. Hydrocolloids can modify the texture of aqueous systems and provide stabilization. The at least one hydrocolloid can be various hydrocolloids such as biological hydrocolloids, synthetic hydrocolloids, and semi-synthetic hydrocolloids. Preferably, the at least one hydrocolloid is derived from a biological source, such as a plant source, an animal source, or a microbial source. The plant source may comprise algae such as macroalgae. Non-limiting examples of macroalgae include red seaweeds (Rhodyphyta), brown seaweeds (Phaeophyta), and green seaweeds (Chlorophyta). The seaweeds can be wet or dry. The animal source may comprise crustaceans, fish, and terrestrial animals. Non-limiting examples of crustaceans include shellfish such as shrimp, crab, and krill.

During extensive testing, the applicant has experienced that cross-linking more than one type of structural polymer with each other presents a significant challenge and is often not possible, resulting in collapsed materials which do not qualify as foam materials.

In aspects, the bio-foam comprises at least one structural polymer, such as one structural polymer, such as two structural polymers, such as three structural polymers. The at least one structural polymer may be suitable for cross-linking to other structural polymers of the bio-foam material, i.e. to the same type of structural polymer and/or to different types of structural polymers and maintain a stable polymer matrix over time. In aspects, the at least one structural polymer may be a hydrocolloid selected from the group comprising alginate, gelatin, chitin, chitosan, carrageenan, pectin, guar gum, xanthan gum, fucoidan, agar, cellulose-derivatives, cellulose, and cellulose nano-fibrils. If the bio-foam comprises more than one structural polymer, the different structural polymers are typically chemically compatible to form strong chemical bonds with each other, have similar thermal stability, and share compatibility with other additives of the bio-foam.

The applicant has invested significant efforts in product development to identify combinations of different structural polymers which form stable cross-linked polymer matrices. By being able to incorporate combinations of different types of structural polymers, different properties of the bio-foam may be obtained as compared to using only one structural polymer.

In aspects, the at least one structural polymer may comprise alginate and one or more structural polymers selected from the group comprising gelatin, chitin, chitosan, carrageenan, pectin, guar gum, xanthan gum, fucoidan, agar, cellulose derivatives, cellulose, and cellulose nano-fibrils. Preferably, the at least one structural polymer comprises alginate and one or more structural polymers selected from the group comprising gelatin, chitin, chitosan, and guar gum.

The bio-foam may also comprise two structural polymers comprising alginate and gelatin, or alginate and chitin, or alginate and chitosan, or alginate and cellulose or alginate and cellulose nano-fibrils.

The bio-foam may also comprise more than two structural polymers for example comprising alginate and gelatin and chitin, or alginate and gelatin and chitosan.

The choice of the at least one structural polymer may affect properties of the bio-foam including mechanical strength, density, flexibility and elasticity, compressibility, and thermal properties.

The applicant has discovered that a variant of the bio-foam comprising two structural polymers being alginate and gelatin yielded a far thicker and stronger foam with better compressibility as compared to a bio-foam comprising one single structural polymer being alginate. This effect was found for both a bio-foam with closed cell structures and a bio-foam with open cell structures and is likely a consequence of how the two structural polymers organize the polymer matrix. Bio-foam variants comprising the two structural polymers alginate and chitin, or alginate and chitosan, resulted in more porous and aerated foam-structures compared to other variants of the bio-foam. Surprisingly, bio-foams comprising the two structural polymers alginate and chitin, or alginate and chitosan demonstrated viscoelastic properties much like memory foams. Another variant of the bio-foam comprising three structural polymers being alginate, gelatin, and chitin reflected an aerated foam with increased foaming properties resulting in increased thickness of the bio-foam.

The at least one structural polymer can be used in its native form, alternatively it can be used in its salt form. The salt form is typically constituted by the organic polymer backbone containing acidic or basic functional groups, and the counter-ions that neutralize these groups. Examples of such counter-ions include sodium, calcium, and potassium. Hence, the at least one structural polymer may be in its salt form, preferably alginate is in its salt form comprising sodium alginate (Na-alginate), calcium alginate (Ca-alginate), or potassium alginate (K-alginate). The at least one structural polymer may be in its native form and is converted to its salt form *in situ.* For example, alginic acid and NaOH may be used in combination to form *in situ* Na-alginate.

The at least one structural polymer may be present in amounts sufficient to enable gelation of the last least one structural polymer and formation of the structural matrix. If the at least one structural polymer content is too high, the bio-foam may become too rigid and dense, compromising its ability to foam effectively, and resulting in a rigid, inflexible material i.e. a material lacking characteristic foam properties. In aspects, the bio foam may comprise alginate as the at least one structural component comprising an amount in the range of 50-95% by weight, such as typically of 50-65% by weight, such as of 65-95% by weight, more preferably of 60-90% by weight of the bio-foam. In aspects, the at least one structural component of the bio-foam comprises alginate and gelatin, or alginate and chitin, or alginate and chitosan. The bio-foam may comprise the at least one structural component in a ratio of 2:1 to 1:2, such as of 2:1, 1:1, or 1:2. In aspects, the at least one structural component of the bio-foam comprises alginate and chitin and gelatin. Each structural component may be present in a ratio of 1:1:1 to 3:1:3, such as of 1:1:1, 2:1:2, 2:1:3, 3:1:2, or 3:1:3. The amount of each structural component may be varied depending on the desired properties of the bio-foam.

In aspects, the biodegradable bio-foam comprises up to 20% by weight of biogenic inorganic compounds, such as 0-5% by weight, 5-10% by weight, 10-15% by weight, or 15-20% by weight. Inorganic compounds offer various contributions in foam materials.

For example, such inorganic compounds can act as fillers, stabilizers, reinforcing agents, blowing, or foaming agents. In aspects, the inorganic compounds are selected from the group comprising salts, oxides, acids, bases, minerals, and metals. Preferably, the inorganic compounds are biogenic inorganic compounds selected from the group comprising minerals, such as CaCO₃, CaSO₄, SiO₂, and Na₃PO₄. Preferably, the inorganic compounds comprise biogenic inorganic compounds, wherein the biogenic inorganic compounds comprise minerals from marine and/or terrestrial sources, such as plant sources and/or animal sources. The marine sources of the inorganic compounds are selected from the group comprising microalgae, marine protozoans, mollusk shells, fish scales and bones, and crustacean shells. Non-limiting examples of such marine sources include diatoms, foraminifera, oysters, clams, mussels, fish waste from food industry, crabs, shrimps. The terrestrial sources comprise sources such as animal bones, and eggshells. Preferably, the sources of the inorganic compounds are harvested by methods that do not interfere with the ecosystem. This means that the sources are waste products from another industry, such as fish waste from food industry, but can be utilized further in the foam as disclosed herein. Another example is use of crab shells retrieved from the ocean floor during ocean floor cleaning processes.

The choice of the inorganic sources is dependent on the structural polymer used in the bio-foam because the properties of the inorganic components may be appropriate for the structure and properties of the structural polymer. Alternatively, the inorganic compounds may comprise non-biogenic sources such as minerals from mining. Careful considerations of the bio-foam material properties, environmental impact, biodegradability of the bio-foam material, and long-term sustainability of the material may be taken when selecting the source of the inorganic compounds.

The biodegradable bio-foam may comprise at least one additive. Additives include a broad group of compounds which, when incorporated into the biopolymer matrix, enhance, modify, or introduce specific properties to the final product. Hence, the role of a structural polymer of a foam is to form a structural matrix, providing the foam material's base and supporting the foam's overall integrity. The role of additives may be enhancing foam stability, adjusting mechanical properties, controlling cell structure, promoting nucleation, improving fire resistance, or providing specific functionalities like antimicrobial or UV protection. Additives include, but are not limited to, components such as fillers, setting agents, plasticizers, stabilizers, foaming agents, flame retardants, and colorants. Each additive has distinct contributions to the bio-foam. For example, a nucleating agent enhances the formation of small crystals during polymer foaming, promoting bubble formation which affects the cellular structure, porosity and density of the foam thus affecting the overall microstructure of the foam. In contrast, a filler is chemically inert with the bio-foam and modifies properties of the foam by physically occupying space in the foam matrix.

The biodegradable bio-foam may comprise at least one filler, preferably a green filler which is biodegradable and/or recyclable. When incorporated into the polymer matrix, a filler physically occupies space within the polymer matrix which results in alteration of the bio-foam's characteristics. Hence, the fillers described herein are chemically inert with the bio-foam. When used as a filler, the compound is not cross-linked to any structural polymers of the bio-foam. Fillers offer various contributions to biopolymer-based foams by the ability to enhance the mechanical strength, hardness, firmness, thermal conductivity, flexibility, elasticity, compressibility, fire resistance, and aesthetic properties of the foam. For example, a filler can function to modulate properties such as the hardness and the firmness of the bio-foam.

In aspects, at least one green filler is used as a component of the bio-foam. When defining a filler as a green filler, not only is the source of the filler natural, but the at least one green filler is sustainably sourced, has a minimal carbon footprint, is nontoxic, and it is biodegradable and/or recyclable. Careful selection and optimization of filler type, size, concentration, and distribution within the polymer matrix should be done for achieving desired foam properties and performance. The at least one green filler can be an inorganic compound as disclosed above. Alternatively, it can be an organic compound sourced from plant-based sources, wherein the plant-based sources may comprise marine and terrestrial sources. In aspects, the at least one green filler is an inorganic compound and/or an organic compound. In aspects, the at least one green filler is selected from the group comprising CaCOs, cellulose, and cellulose nano-fibrils. In aspects, the at least one green filler is selected from the group comprising CaCOs, cellulose, cellulose nano-fibrils, chitin, and chitosan. Preferably, the at least one filler comprises CaCOs and cellulose nano-fibrils. In aspects, the at least one filler comprises CaCO₃ and cellulose nano-fibrils, and further at least one additional biodegradable and/or recyclable filler selected from the group comprising chitosan and chitin. Preferably, the sources of the at least one filler are waste products from other industries. In aspects, cellulose nano-fibrils are waste from paper production, CaCO₃ is sourced from crab shells or eggshells or from mining, and chitosan and chitin are sourced from shrimp shells and/or old crab shells.

The type and amount of filler may be selected with respect to the one or more structural polymers of the bio-foam. The filler may be of appropriate size to fit into the polymer matrix of the bio-foam and may be present in an amount which allows for the polymer matrix to hold its structure, i.e. not collapse. The bio-foam may comprise CaCOs as a filler in an amount in the range of 0.2-35% by weight, such as typically of 0.2-3% by weight, such as of 3-10% by weight, alternatively of 10-35% by weight, preferably of 0.3-10% by weight. The bio-foam further may further comprise cellulose nano-fibrils as a filler in amount in the range of 1-80% by weight, such as typically of 1-25% by weight, of 25-50% by weight, of 50-80% by weight, preferably of 5-45% by weight.

The biodegradable bio-foam may comprise at least one foaming agent and/or at least one foam stabilizing agent. Such agents are substances that help generate a cellular structure in a process commonly referred to as the foaming process. The foaming process refers to the formation of a cellular structure within the polymer matrix, typically resulting from the generation and expansion of gas bubbles. The gas responsible for foaming may be introduced in various ways, typically using foaming agents, and/or foam stabilizing agents. Foaming agents comprise chemical foaming agents, i.e., compounds that decompose upon heating to release a gas, and enzymatic foaming agents, i.e., enzymes which use sources in the biopolymer composition to produce gases within the biopolymer matrix, such as yeast or yeast mixtures. When referring to enzymatic foaming agents herein, the corresponding substrates required for the enzymatic conversion reaction of substrate to gas product is also considered part of the enzymatic foaming agent. For example, yeast containing catalase in combination with the required substrate hydrogen peroxide (H₂O₂) are both considered to be enzymatic foaming agents. Foaming agents are typically incorporated into the polymer mixture in the process of chemical foaming.

The bio-foam may comprise at least one foam stabilizing agent. Foaming stabilizers, such as surfactants, do not produce gas themselves, but facilitate and stabilize the foam formed by gas introduction. In aspects, the foaming stabilizers comprise surfactants. Such surfactants may be used with the process of mechanical foaming, in which mechanical methods including high-speed stirring, whipping, or other means of incorporating or introducing air or other gases into the biopolymer solution are used. Surfactants aid in bubble formation and stabilization. Surfactants may also be used with the process of chemical foaming, in combination with foaming agents. Hence, the bio-foam may comprise at least one foam stabilizing agent and at least one foaming agent. The foaming process may also occur without any additives, i.e., only by means of mechanical air incorporation such as by vigorous whisking, whipping, or stirring. The means of initiating the foaming process is dependent on the components of the bio-foam, particularly on the structural polymer used. Hence, the biodegradable bio-foam may comprise no foaming agent and/or foam stabilizing agent.

The choice of foaming agent or foam stabilizing agent depends on the desired properties of the final bio-foam. Foam stabilizing agents in combination with mechanical foaming generates closed cell foams, wherein the cells within the biopolymer matrix are closed and packed tightly together. The biodegradable bio-foam may comprise a closed cell foam comprising at least one foam stabilizing agent, comprising at least one surfactant. Preferably, the at least one surfactant is selected from the group comprising saponins, alkyl polyglycolides, sucrose esters, and sorbitan esters. Preferably, the foam stabilizing agent is derived from renewable sources.

Foaming agents and/or foam stabilizing agents and/or mechanical foaming generate open cell foams, wherein the cells within the biopolymer matrix are interconnected, thus creating a more flexible and more compressible material. In aspects, the biodegradable bio-foam is an open cell foam comprising at least one foaming agent, such as at least one chemical foaming agent, and/or at least one enzymatic foaming agent. Preferably, the at least one enzymatic foaming agent is selected from catalase, glucose oxidase, and alpha amylase and further include the respective substrates of each enzyme. Preferably, the at least one enzymatic foaming agent comprises catalase and further includes the substrate of catalase being hydrogen peroxide (H₂O₂). In some cases, a closed cell foam may be converted to an open cell foam by applying mechanical force to the closed cell foam. In aspects, mechanical forces such as kneading may be used to convert the closed cell foam to an open cell foam.

In some aspects, the biodegradable bio-foam comprises at least one plasticizer. Plasticizers are a class of additives contributing to modify or improve characteristic properties of the foam material including the flexibility, softness or compressibility, and resilience of the foam material. Plasticizers are typically small molecule compounds or low molecular weight compounds, as such molecules can intermingle with the polymer chains and reduce the intermolecular forces, allowing the polymer chains to move more freely. This increased mobility of the polymer chains results in greater flexibility and improved processing characteristics. In aspects, the plasticizer may be a blowing agent. In aspects, the plasticizer may be a polyol, such as sugars or larger alcohols. Preferably, the plasticizer is glycerol, also called glycerine or glycerin. The choice of plasticizer is dependent on the structural polymer used, processing requirements and end use applications.

The invention includes a composition providing a closed cell foam according to aspects and a composition providing an open cell foam according to aspects. The invention also includes methods of manufacturing the closed cell bio-foam and the open cell bio-foam.

The choice of the at least one foaming agent or foam stabilizer depends on the desired properties of the final product. Foaming stabilizers in combination with mechanical foaming generates closed cell foams, wherein the cells within the biopolymer matrix are closed and packed tightly together. Foaming agents and/or foaming stabilizers and/or mechanical foaming generate open cell foams, wherein the cells within the biopolymer matrix are interconnected, thus creating a more flexible and more compressible material. In aspects, the biodegradable bio-foam comprises at least one foaming agent, such as a foam stabilizing agent. In aspects, the biodegradable bio-foam comprises at least one foaming agent, such as a foam stabilizing agent, and/or at least one enzymatic foaming agent. Preferably, the at least one foam stabilizing agent is a surfactant, more preferably the surfactant is a green surfactant derived from renewable sources selected from saponins, alkyl polyglycolides, sucrose esters, or sorbitan esters. Preferably, the at least one enzymatic foaming agent is selected from catalase, glucose oxidase and alpha amylase and further includes the respective substrates of each enzyme. In some cases, a closed cell foam may be converted to an open cell foam by applying mechanical force to the closed cell foam. In aspects, mechanical forces such as kneading may be used to convert the closed cell foam to an open cell foam.

The biodegradable bio-foam may comprise at least one additive in the form of at least one sequestering agent. Sequestering agents, chelators, or chelating agents, can form several coordinate bonds with a single metal ion. Hence, they sequester metal ions to prevent such ions from participating in undesirable premature reactions or processes. The choice of sequestering agent largely depends on the choice of biopolymer used as the structural component. The sequestering agent may have the appropriate properties to efficiently bind to and form complexes with the metal ions present in the aqueous biopolymer solution. Other variables which may be considered when selecting the sequestering agent include, but are not limited to, which metal ions to be sequestered, pH sensitivity, desired foam properties, and desired release mechanism of the sequestered ions. In aspects, the at least one sequestering agent is selected from the group comprising trisodium phosphate (Na₃PO₄), disodium phosphate (Na₂HPO₄), sodium citrate (Na₃C₆H₅O₇), and tetrasodium pyrophosphate (Na₄P₂O₇).

The biodegradable bio-foam disclosed in the present invention may comprise at least one gelation-initiating agent, also commonly referred to as a gelling agent. Herein, gelation-initiating agents are defined as means of allowing the foam to transition from a liquid or semi-liquid state to a solid state, meanwhile ensuring that the foam retains its desired cellular structure and mechanical properties. The primary function of gelation-initiation agents is to facilitate the crosslinking or bonding of polymer chains, leading to the development of a three-dimensional network structure within the polymer matrix. Hence, the gelation-initiating agents facilitate crosslinking of the structural components i.e. the structural biopolymers of the bio-foam. The formation of a solid matrix subsequently gives structure to the foam. The gelation reaction provides the rigidity and structure necessary for the foam's desired properties. The choice of gelation-initiating agent depends on the type of structural biopolymer used, because the properties of the gelation-initiating agent may be suitable for forming interactions with the biopolymers to provide a stable foam structure. In aspects, the gelation-initiating agent comprises a substance, a gelation-initiating step, and/or a gelation-initiating action. In aspects, the at least one gelation-initiating agent is a substance selected from the group comprising cations, anions, and organic acids. In aspects, the at least one gelation-initiating agent is selected from the group comprising potassium (K⁺) ions, calcium (Ca²⁺) ions magnesium (Mg²⁺) ions, aluminum (Al³⁺) ions, tripolyphosphate (TPP), and acetic acid. Preferably, the at least one gelation-initiating agent comprises divalent cations. Preferably the at least one gelation-initiating agent is selected from the group comprising calcium sulphate (CaSO₄), calcium carbonate (CaCO₃), and calcium chloride (CaCl₂).

In aspects, the biodegradable bio-foam does not comprise a gelation-initiating agent. The means of gelation initiation may comprise a gelation-initiating step such as temperature adjustment, or a defined timeframe of incubation at a defined temperature. In the case of temperature-dependent gelation, changes in temperature rather than addition of gel-initiating agents drive the structural polymer solution to transition from a liquid phase to a gel or solid-like state. The temperature-dependent gelation can be characterized into positive temperature-dependent gelation and negative temperature-dependent gelation reflecting that a temperature increase, and a temperature decrease can promote gelation, respectively. Whether a temperature increase or decrease promotes initiation of gelation, depends on the structural polymer and other components in the polymer mixture.

Variants of the biodegradable bio-foam can thus vary in the ratio of the bio-based and/or renewable materials to the inorganic compounds. In aspects, the ratio of the bio-based and/or renewable materials to the inorganic compounds may be in the range of 100:1 to 4:1, such as of 9:1, 19:1, or 30:1.

To exemplify, a variant of the biodegradable bio-foam of the invention may comprise alginate as the structural component, inorganic CaCOs from old crab shells as a filler, and cellulose nano-fibrils as a green filler. Another variant of the biodegradable bio-foam may comprise alginate and gelatin as the structural components and inorganic CaCOs from eggshells as a filler.

In aspects, the biodegradable bio-foam may comprise alginate selected from the group comprising alginate, alginic acid, Na-alginate, Ca-alginate and K-alginate as the at least one structural component, and at least one biodegradable and/or recyclable filler comprising CaCOs and cellulose nano-fibrils. Herein, alginate comprises 50-95% by weight, CaCOs comprises 0.2-31 % by weight, and cellulose nano-fibrils comprises 1-80% by weight. In aspects, the bio-foam is a soft foam comprising at least one structural component being alginate in the range of 50-65% by weight, and at least one biodegradable and/or recyclable fillers comprising CaCOs in the range of 0.2-3% by weight and cellulose nano-fibrils in the range of 1-25% by weight. This bio-foam variant is suitable for surfaces that gives slightly way to weight, such as suitable for use in sandwich-type constructions.

In aspects, the bio-foam is a firmer foam comprising at least one structural component being alginate in the range of 50-65% by weight, and at least one biodegradable and/or recyclable filler comprising CaCOs in the range of 0.2-3% by weight and cellulose nano-fibrils in the range of 25-50% by weight. This is an example of a bio-foam variant which can withstand a weight of up to 100 kg, such as 80 kg, such as 50 kg. Hence, such bio-foam variant is suitable for being part of a construction that should carry a weight of up to 100 kg, such as 80 kg, such as 50 kg.

Preferably, the bio-foam comprises at least one structural component being alginate in the range of 60-90% by weight, and at least one biodegradable and/or recyclable filler comprising CaCOs in the range of 0.3-10% by weight and cellulose nano-fibrils in the range of 5-45% by weight.

In aspects, the biodegradable bio-foam comprises alginate and chitin and/or gelatin as structural polymers, and CaCOs and cellulose nano-fibrils as fillers.

In another aspect, the invention relates to a method for producing a biodegradable bio-foam according to the first aspect, such as the biodegradable bio-foam as disclosed herein, wherein the method comprises a wet process phase and a dry process phase. The applicant has developed a method for producing a biodegradable bio-foam, wherein the production process enables the reclamation of 40% of water effluent, which is subsequently reintegrated into the production cycle. This is achieved by having a process comprising of a wet phase and a dry phase. During dehumidifying of the bio-foam when transitioning from wet phase to dry phase, water is collected and can be reused in the subsequent production process. Thus, the production process leads to a substantial reduction in overall water consumption and water waste. Furthermore, the production process follows sustainable practices, with over 90% of the energy utilized in the production process being sourced from renewable sources.

In aspects the invention provides a method for producing a biodegradable bio-foam, comprising at least the following steps:
A. preparing a structural polymer-solvent mixture by mixing at least one structural component and a solvent;
B. preparing a pre-foaming mixture by mixing the structural polymer-solvent mixture with at least one additive;
C. heating the pre-foaming mixture and/or structural polymer-solvent mixture to a temperature in the range of 30-70°C;
D. preparing a foaming mixture by adding to the pre-foaming mixture means of inducing mechanical and/or chemical foaming such as a foaming agent, a foam stabilizing agent, and/or mechanical stirring;
E. preparing a gelling mixture by providing at least one gelation-initiating agent to the foaming mixture;
F. setting the foam in a mold;
G. drying the foam; wherein
steps A-F comprise a wet phase, and step G comprises a dry phase.

The above-mentioned method may be elaborated as follows. The bio-foam is defined as by the first aspect.

Example 1 and Example 2 provide examples of specific concentrations used of each of the components for producing a closed cell foam, and an open cell foam, as described herein. The specific amounts are examples only and may be varied. A person of ordinary skill in the art would recognize that the specific amounts of the compounds described herein can be adjusted based on the desired characteristics or properties of the end-product, i.e., the biodegradable bio-foam. Such fine-tuning of component amounts would be within the capabilities of one skilled in the art to optimize the method and achieve the desired specifications.

Firstly, the structural polymer-solvent mixture of step A is made by mixing at least one structural component, wherein the at least one structural component is a structural polymer, and a solvent. The at least one structural component comprises a hydrocolloid. In aspects, the structural polymer-solvent mixture is mixed until homogenous. In aspects, the structural polymer-solvent mixture is not mixed until homogenous, i.e., the structural polymer is not evenly dispersed throughout the solvent. As disclosed earlier in the application, the structural polymer may be in its native form or in its salt form. In aspects, the at least one structural polymer is selected from the group comprising alginate, gelatin, chitin, chitosan, carrageenan, pectin, guar gum, xanthan gum, fucoidan, agar, cellulose, cellulose-derivatives, and cellulose nano-fibrils. In aspects, the at least one structural polymer is alginate, in the form selected from the group comprising alginic acid, alginate, Na-alginate, Ca-alginate and K-alginate. In aspects, the at least one structural polymer is alginate in salt form, preferably Na-alginate. In aspects, the at least one structural polymer is alginate and at least one additional structural polymer is selected from the group comprising gelatin, chitin, chitosan, carrageenan, pectin, guar gum, xanthan gum, fucoidan, agar, cellulose, cellulose derivatives, and cellulose nano-fibrils, preferably gelatin, chitin, chitosan, and guar gum. In aspects, the at least one structural polymer is alginate and gelatin, or alginate and chitin, or alginate and chitosan, or alginate and cellulose, or alginate and cellulose nano-fibrils. In aspects wherein more than one structural component is added, at least one structural component of the structural polymer-solvent mixture is selected from the group comprising alginate, Na-alginate, K-alginate, Ca alginate, and alginic acid.

The solvent used in step A, may be a solvent appropriate to perform its intended function as a dispersing or solvating medium of the at least one structural polymer homogeneously to form a solution or gel, which can subsequently be foamed. The at least one structural polymer of the invention is a biopolymer, preferably a hydrocolloid polymer. Because hydrocolloids are water-soluble polymers, the solvent is preferably a solvent with polar or hydrophilic properties. In aspects, the solvent is selected from the group of water, glycerol, and ethanol, preferably the solvent is water. Optionally, means of heating the structural polymer-solvent mixture is provided to achieve better dissolving of the structural polymer in the solvent. In aspects, the solvent is pre-heated to a temperature in the range of 30-70°C, such as of 30-50°C, of 50-70°C, preferably of 35-65°C. In aspects, the temperature is in the range of 30-100°C, such as of 35-65°C, alternatively of 65-100°C. In aspects, when the at least one structural polymer comprises alginate, the temperature is in the range of 30-70°C to sufficiently dissolve alginate. In aspects when the at least one structural polymer comprises alginate and gelatin, the temperature is in the range of 30-100°C, such as of 65-100°C. In aspects, the at least one structural polymer is added to the pre-heated solvent and mixed.

Secondly, the pre-foaming mixture of step B is prepared by mixing the structural polymer-solvent mixture of step A with at least one additive, such as at least one filler, sequestering agent, and/or plasticizer. Such additives are incorporated into the pre-foaming mixture containing the base structural polymer to modify the properties or processing characteristics of the pre-foaming mixture. The function of each additive is described in detail in earlier aspects of the present invention. In aspects, the at least one additive added to the structural polymer-solvent mixture to prepare the pre-foaming mixture comprises at least one plasticizer such as glycerol, at least one filler such as at least one filler selected from the group comprising CaCOs, cellulose nano-fibrils, chitosan and chitin and/or at least one sequestering agent such as Na₃PO₄. In aspects, the at least one additive comprises at least one biodegradable and/or recyclable fillers selected from CaCOs and cellulose nano-fibrils. In aspects, the at least one additive comprises at least two biodegradable and/or recyclable fillers comprising CaCOs and cellulose nano-fibrils. In aspects, the at least one biodegradable and/or recyclable filler comprises CaCO₃, cellulose nano-fibrils and chitosan and/or chitin.

Optionally, at least one additional structural component may be added to the pre-foaming mixture. The at least one additional structural component is selected from the group comprising alginate, agar, carrageenan, cellulose, cellulose nano-fibrils, pectin, guar gum, xanthan gum, gelatin, chitin, chitosan, and fucoidan, preferably gelatin, chitin, chitosan, cellulose, cellulose nano-fibrils, and guar gum. In aspects, when the at least one structural polymer of the structural polymer-solvent mixture comprises alginate, the at least one additional structural polymer added to the pre-foaming mixture comprises gelatin and chitin, or gelatin and chitosan.

Optionally, at least one sequestering agent and/or a plasticizer may be added to the mixture in step B to modify the properties or processing characteristics of the pre-foaming mixture. The choice of components and amount of said components depends on the desirable properties for the end bio-foam product. In aspects, at least one plasticizer comprising glycerol is added in step B. In aspects at least one plasticizer comprising glycerol, and/or at least one sequestering agent selected from the group comprising Na₃PO₄, CaSO₄, Na₂HPO₄, Na₃C₆H₅O₇, and Na₄P₂O₇ are added in step B to prepare the pre-foaming mixture. The function of each additive is described in detail in earlier aspects of the present invention.

Optionally, in step C, the structural polymer-solvent mixture of step A and/or the pre-foaming mixture of step B is heated to a temperature in the range of 30-70°C, such as of 30-50°C, of 50-70°C, or of 40-60°C, preferably of 35-65°C. In aspects, the solvent of step A is pre-heated to a temperature in the range of 30-70°C, such as of 30-50°C, of 50-70°C, preferably of 35-65°C. In aspects, the heating of at least one of the pre-foaming mixture and the structural polymer-solvent mixture is conducted by pre-heating the solvent of step A to 35-75°C before it is introduced. In aspects, the temperature is in the range of 30-100°C, such as of 35-65°C, alternatively of 65-100°C. In aspects, when the at least one structural polymer comprises alginate, the temperature is in the range of 30-70°C to sufficiently dissolve alginate. In aspects when the at least one structural polymer comprises alginate and gelatin, the temperature is in the range of 30-100°C, such as of 65-100°C. In aspects, the structural polymer of step A is added to the pre-heated solvent and mixed. The optional heating step of the structural polymer-solvent mixture of step A and/or the pre-foaming mixture of step B is provided to achieve better dissolving of the at least one structural polymer in the solvent. Following the attainment of the desired temperature within this range, the mixture is promptly removed from the heat source.

Thirdly, the foaming mixture of step D is prepared by adding to the pre-foaming mixture of step B means of inducing mechanical and/or chemical foaming such as at least one foaming agent and/or at least one foam stabilizing agent, and/or mechanical stirring to obtain a foam. The functions of foaming agents and foam stabilizing agents is described in detail in earlier aspects of the present invention.

In aspects, at least one foam stabilizing agent is added to the pre-foaming mixture to prepare the foaming mixture. In a preferred aspect, the at least one foam stabilizing agent is a surfactant, preferably the at least one foam stabilizing agent is a green surfactant. As disclosed earlier in the detailed description, foam stabilizing agents may be used in combination with vigorous mixing to incorporate air in the process of mechanical foaming. In aspects, at least one foaming agent and/or at least one foam stabilizing agent is added to the pre-foaming mixture to prepare the foaming mixture. In a preferred aspect, the at least one foam stabilizing agent is a surfactant, preferably a green surfactant i.e. a biodegradable and/or recyclable surfactant, and the at least one foaming agent is an enzymatic foaming agent, preferably a substrate for catalase such as H₂O₂. By using at least one foaming agent alone or in combination with at least one foam stabilizing agent, chemical foaming and/or mechanical foaming allows incorporation of a larger amount of air compared to mechanical foaming only. Only mechanical foaming is achieved at this stage, as a second enzymatic foaming agent is required to initiate chemical foaming (refer to step E2). In aspects, the pre-foaming mixture of step B is mixed with at least one foam stabilizing agent, preferably a surfactant selected from the group comprising saponins, alkyl polyglucosides, sucrose esters, and sorbitan esters, and the mixture is subsequently subjected to vigorous mixing to incorporate air in the process of mechanical foaming. In aspects, foaming is induced only by mechanical means such as whipping, stirring, or whisking, i.e. no foam stabilizing agent is added. In aspects, the pre-foaming mixture of step B is mixed with at least one foaming agent, comprising a chemical or enzymatic foaming agent. In aspects, the pre-foaming mixture of step B is mixed with at least one chemical or enzymatic foaming agent and at least one foam stabilizing agent comprising a surfactant. In some aspects, when the method is for making an open cell bio-foam the at least one foaming agent is an enzymatic foaming agent.

Fourthly, the gelling mixture of step E is prepared by providing at least one gelation-initiating agent to the foaming mixture of step D. In aspects, the at least one gelation-initiating agent is added to the foaming mixture under stirring, wherein the at least one gelation-initiating agent facilitates release of ions suitable for forming interactions with the at least one structural polymer to provide a stable foam structure. In aspects, the at least one setting agent comprises cations, such as calcium (Ca²⁺) ions magnesium (Mg²⁺) ions, potassium (K⁺) ions, or aluminum (Al³⁺) ions. In aspects, when the at least one structural polymer comprises alginate, Na-alginate, K-alginate, Ca-alginate or alginic acid, the at least one gelation-initiating agent comprises divalent cations, preferably in the form of Ca²⁺ ions. In aspects, when the structural polymer is Na-alginate, the at least one setting agent is selected from the group comprising calcium sulphate (CaSO₄), calcium carbonate (CaCO₃), and calcium chloride (CaCl₂). The addition of the at least one gelation-initiating agent initiates the gelation process. In aspects, the at least one gelation-initiating agent is in the form of providing a temperature appropriate for gelation to be initiated. The temperature appropriate for gelation is highly dependent on the at least one structural polymer used in upstream steps of the method.

In aspects, the method is for producing an open cell biodegradable bio-foam. Following initiation of the gelation process, at least one foaming agent is optionally added to the gelling mixture of step E to initiate an enzymatic foaming process in step E2. Herein, the at least one foaming agent is selected based on the at least one foaming agent added in step D, i.e., in preparing the foaming mixture. In aspects, the at least one foaming agent added in step D is an enzymatic foaming agent, such as H₂O₂. Accordingly, the at least one enzymatic foaming agent added in step E2 is a source of catalase, such as yeast mixture. Adding and mixing in the yeast mixture in step E2 will initiate an enzymatic foaming process. In aspects, the enzymatic foaming agent added in step E2 is selected from the group comprising catalase, glucose oxidase and alpha amylase, preferably catalase.

Fifthly, the gelling mixture of step E or step E2 is transferred to a mold in step F, wherein the gelation process continues until it is completed. The time span of such gelation process until the bio-foam is set is approximately 30-90 minutes, such as approximately 30-50 minutes, approximately 50-90 minutes, preferably 60 minutes.

Sixthly, upon completion of the gelation process, the gel of step F is unmolded and dehumidified or dried in step G. In aspects, the bio-foam is dried in a dehumidifier in conjunction with hot air drying creating a vacuum effect at a temperature in the range of 30-40°C, such as 30-35°C or 35-40°C, preferably 36°C. The time of drying depends on parameters such as the drying temperature and the amount of gel product. The time of drying can last for 1-7 days, such as 1-4 days, such as 3-7 days, preferably 3 days.

While the preferred order of method steps is mentioned above, the method is not strictly limited to this specific sequence. The invention may also be limited to the above-mentioned order of method steps. In aspects, in the method as described above the drying of the foam comprises a dry phase and the remaining method comprises a wet phase.

Table 1 shows examples of specific concentrations in % by weight (wt%) used of each of the components in the method as described herein for producing a closed cell foam (column 2), and an open cell foam (column 3), as described herein. Herein, the bio-foam comprises Na-alginate as the structural polymer, CaCOs and cellulose nano-fibrils as biodegradable and/or recyclable fillers, Na₃PO₄ as a sequestering agent and CaSO₄ as a gelation-initiating agent. The specific amounts are examples only and may be varied. The bio-foam may comprise one structural polymer being alginate in an amount in the range of 50-95 wt%, such as of 50-65 wt%, such as of 65-95 wt%, more preferably of 60-90 wt% of the bio-foam. The bio-foam may comprise CaCOs as a filler in an amount of 0.2-31 wt%, such as of 0.2-3 wt%, such as of 3-10%, alternatively of 10-31 wt%, preferably of 0.3-10 wt%. The bio-foam further comprises cellulose nano-fibrils as a filler in an amount of 1-80 wt%, such as of 1-25 wt%, such as of 25-50 wt%, such as of 50-80 wt%, preferably of 5-45 wt%.

**Table 1: Exemplary specific concentrations in % by weight (wt%) of the components used in a method to produce a representative closed cell foam and open cell foam, using a sodium alginate (Na-alginate) as the structural biopolymer, CaCO₃ and cellulose nano-fibrils as two recyclable and/or degradable fillers. In the exemplary specific concentrations as disclosed herein, the wt% of Na-alginate is calculated based on the dry weight of Na-alginate. If converted to Na-alginate dissolved in water i.e. to a Na-alginate solution, the wt% of Na-alginate solution equivalates to approximately 77 wt%.**

| **Component** | **Closed cell foam, wt%** | **Open cell foam, wt%** |
|---|---|---|
| Water/solvent | 63.73 | 60.45 |
| Glycerol | 6.37 | 6.04 |
| Na₃PO₄ | 0.25 | 0.24 |
| CaCO₃ | 1.27 | 1.21 |
| Na-alginate | 2.55 | 2.42 |
| Cellulose-nanofibrils (3%) | 10.83 | 10.28 |
| Surfactant | 0.32 | 0.30 |
| CaSO₄ in water | 1.27 in 12.75 | 1.21 in 12.09 |
| Yeast mixture in water | - | 0.3 in 2.72 |
| H₂O₂ | - | 2.12 |

There are several alternative variants of the method for making the biodegradable bio-foam, depending on whether the method is for producing a foam material for testing and characterizing properties of the foam, or for larger scale production of the foam. Example 1 describes one alternative variant of the method for producing a closed cell variant of the biodegradable bio-foam for testing and/or characterization of the foam material. Example 2 describes one alternative variant of the method for producing an open cell variant of the biodegradable bio-foam for testing and/or characterization of the foam material. Alternative variants of the method, such as methods for large scale production, may comprise steps or conditions from the methods described in Example 1 and/or in Example 2, in combination with other steps and/or conditions depending on the desired composition and properties of the biodegradable bio-foam material.

The material disclosed in the present invention can be used for a vast range of applications. Non-limiting examples of such applications include furniture padding, shoe padding, material for sound isolation, seat padding, headset padding, microphone padding and other applications where you normally find flexible polyurethane. Hence, in aspects, the invention relates to an object comprising the biodegradable bio-foam wherein the object is selected from the group comprising a furniture padding, a shoe padding, a seat padding, a headset padding, a microphone padding, a material for sound isolation, and a car seat padding. The biodegradable bio-foam comprises at least 80% of bio-based materials and has been found to have surprising fire-retardant properties, as tested by the applicant as described in Example 3. The bio-foam is thus applicable for settings where fire safety requirements are enforced, such as in car seats. The bio-foam offers a compelling alternative to conventional fire retardants, which frequently incorporate substances harmful to health. These fire retardants contain substances which tend to leak out to the surrounding environment over time, diminishing the fire-retardant efficacy and compromising safety meanwhile posing potential risks to human health upon exposure.

As reflected in the disclosure, careful considerations may be taken regarding the inherent properties of each component or agent and how they interact with each other to influence the foam's final properties and performance. It will be appreciated by a person skilled in the art that various components such as type of structural polymer, filler, sequestering agent, foaming agent, and foam stabilizing agent can be selected based on the desired properties and characteristics of the biopolymer-based foam. While specific aspects and examples are provided herein for illustrative purposes, these are not intended to be limiting. The present disclosure provides guidance, principles, and general methodologies that enable the person skilled in the art to select the appropriate components based on the intended application and specific requirements of the biopolymer-based foam.

### EXAMPLES

### Example 1: Method of producing a closed cell variant of a biodegradable alginate bio-foam for testing and/or characterization purposes.

In an aspect the invention includes a method of manufacturing a closed cell variant of the bio-foam (such as disclosed in Table 1 or Table 2, second column) comprising the following procedure/method steps:
1. Heat water to 35-65°C on magnetic stirrer. Remove from heat. Add Na-alginate and mix until smooth. Cover and leave overnight in the refrigerator at 2°C.
   a. The next day, mix again before adding other ingredients to ensure a smooth mixture.
2. To water-alginate mixture, add glycerol, calcium carbonate (CaCO₃), and sodium phosphate (Na₃PO₄). Heat to 35-65°C (different temperatures result in different properties in the final product).
   a. If required: add additional structural components or fillers.
3. Remove from heat.
4. Add cellulose and mix until smooth at maximum ratio.
5. Add surfactant and mix at maximum ratio until fully incorporated and the mixture is foamy.
6. Add calcium sulphate (CaSO₄) and mix thoroughly. This initiates the gelation.
7. Transfer to mold and let gel for 1 hour inside of the mold.
8. After gelation, flip the gelled foam out of mold and let dry in a ventilated drying cabinet at 50-60°C.
9. The bio-foam gel is placed in a ventilated drying cabinet. The bio-foam is dried with a dehumidifier in conjunction with hot air drying (HAD) creating a vacuum effect. The drying process is done at 36°C for 3 days.

The prepared bio-foam comprises a ratio of bio-based and/or renewable materials to inorganic compounds of approximately 30:1.

### Example 2: Method of manufacturing an open cell variant of a biodegradable alginate bio-foam for testing and/or characterization purposes.

In an aspect, the invention includes a method of manufacturing an open cell variant of the bio-foam (such as disclosed in Table 1 or Table 2, third column) comprising the following procedure/method steps:
1. Heat water to 35-65°C on magnetic stirrer. Remove from heat. Add Na-alginate and mix until smooth. Cover and leave overnight in the refrigerator 2°C.
   a. The next day, mix again before adding other ingredients to ensure a smooth mixture.
2. To water-alginate mixture, add glycerol, calcium carbonate (CaCO₃), and sodium phosphate (Na₃PO₄). Heat to 35-65°C (different temperatures result in different properties in the final product).
   a. If required: add additional structural components or fillers.
3. Remove from heat.
4. Add cellulose and mix until smooth maximum ratio.
5. Add surfactant and H₂O₂. Mix at maximum ratio until fully incorporated and the mixture is slightly foamy.
6. Add calcium sulphate (CaSO₄) and mix thoroughly. This initiates the gelation.
7. Add yeast mixture and mix briefly, but thoroughly. The mixture will increase in volume, by the process of enzymatic foaming wherein yeast catalase converts H₂O₂ to O₂ and H₂O. This releases air into the mixture, creating bubbles.
8. Transfer to mold and let gel.
9. After gelation, flip out of mold and onto a metal grid drying tray. Apply the metal grid tray to the top of the foam as well. This prevents shrinking during drying.
10. Let dry in a ventilated drying cabinet at 50-60°C.
11. The bio-foam gel is placed in a ventilated drying cabinet. The bio-foam is dried with a dehumidifier in conjunction with hot air drying (HAD) creating a vacuum effect. The drying process is done at 36°C for 3 days.

Table 2 provides the concentration of the specific materials (components) used in the preparation of a closed cell variant (column 2) and an open cell variant (column 3) of a biodegradable sodium-alginate bio-foam for testing and/or characterization purposes.

**Table 2: Exemplary specific concentrations by weight or volume used in the preparation of a closed cell variant (column 2) and an open cell variant (column 3) of a biodegradable sodium-alginate bio-foam for testing and/or characterization purposes.**

| **Component** | **Closed cell foam** | **Open cell foam** |
|---|---|---|
| Water | 100 g | 100 g |
| Glycerol | 10 g | 10 g |
| Na₃PO₄ | 0.4 g | 0.4 g |
| CaCO₃ | 2 g | 2 g |
| Na-alginate | 4 g | 4 g |
| Cellulose-nanofibrils | 17 g | 17 g |
| Surfactant | 0.5 ml | 0.5 ml |
| CaSO₄ | 2 g (in 20 ml water) | 2 g (in 20 ml water) |
| Yeast mixture (or another source of catalase) - yeast mixture: 2 g in 20 ml water | | 5 ml |
| H₂O₂ | | 3.5 ml |

### Example 3: Assessment of fire-retardant properties of a bio-foam according to an aspect, tested by Crib 5.

The bio-foam tested was a bio-foam according to a preferred aspect as earlier described herein, comprising at least one structural component being alginate in the range of 60-90 wt%, and at least one biodegradable and/or recyclable filler comprising CaCOs in the range of 0.3-10 wt% and cellulose nano-fibrils in the range of 5-45 wt%.

The fire-retardant properties of the bio-foam was tested by the Crib 5 fire resistance test, also known as Ignition Source 5. The test is designed to assess the fire resistance of materials used in upholstered furniture, such as fabrics, foams, and fillings. It evaluates how a material behaves when exposed to a flame, simulating a potential ignition source.

The bio-foam sample dimensions (width x depth x hight) were 41 cm x 25 cm x 2.5 cm. Two bio-foams of the same type were stacked on top of each other and placed above a crib or pile of wood, simulating the bio-foams used as for instance upholstery, furniture padding, or car seat padding near a potential ignition source. The crib of wood was ignited, and the flames were allowed to burn for a specified duration or until the fire stopped without intervention. For the sample to pass the test, the fire must extinguish itself within 10 minutes. Moreover, the fire should not burn completely through the thickness of the test material.

The bio-foam sample extinguished itself after 4 minutes and 17 seconds. A weight loss of 28.6 g was documented, leaving approximately 2471.4 g of unburnt material remaining after the flame extinguished. Moreover, a charred area of only 9 cm in diameter was measured on the bio-foam surface. The fire did not manage to burn a hole through the upper bio-foam sample of the two stacked samples.

Hence, the bio-foam according to the preferred aspect successfully passed the Crib 5 test, reflecting that the bio-foam complies with the level of fire resistance as defined by the Crib 5 test. This demonstrates the potential areas of applications of the bio-foams as described herein to reduce the risk of fire-related incidents and enhancing overall safety.

## Claims

1. A biodegradable bio-foam comprising:
at least 80% by weight of bio-based and/or renewable materials, comprising:
at least one structural component, wherein the at least one structural component is a hydrocolloid;
up to 20% by weight of biogenic inorganic compounds;
one or more additives comprising a biodegradable and/or recyclable filler.

2. The biodegradable bio-foam according to claim 1, wherein the one or more additives comprise at least two biodegradable and/or recyclable fillers comprising CaCOs and cellulose nano-fibrils.

3. The biodegradable bio-foam according to any of the preceding claims, wherein the at least one structural component is a hydrocolloid selected from the group comprising alginate, agar, carrageenan, cellulose, cellulose nano-fibrils, chitosan, chitin, pectin, guar gum, xanthan gum, wet seaweed, dry seaweed, and gelatin.

4. The biodegradable bio-foam according to any of the preceding claims, wherein the at least one structural component comprises alginate.

5. The biodegradable bio-foam according to any of the preceding claims, further comprising at least one gelation-initiating agent.

6. The biodegradable bio-foam according to any of the preceding claims, comprising at least one biodegradable and/or recyclable filler selected from chitin and chitosan.

7. The biodegradable bio-foam according to any of the preceding claims, wherein the biodegradable bio-foam is a closed cell foam.

8. The biodegradable bio-foam according to any of the preceding claims, wherein the biodegradable bio-foam is an open cell foam.

9. The biodegradable bio-foam according to any of the preceding claims, wherein the at least one structural component comprises alginate and gelatin, or alginate and chitin, or alginate and cellulose or alginate and cellulose nano-fibrils, or alginate and chitosan.

10. The biodegradable bio-foam according to any of the preceding claims, wherein the alginate component comprises Na-alginate or K-alginate or Ca-alginate.

11. The biodegradable bio-foam according to any of the preceding claims, wherein the biodegradable and/or recyclable fillers comprise:
CaCOs in an amount in the range of 0.2-35 wt%, preferably of 0.3-10 wt%, and
cellulose nano-fibrils in an amount in the range of 1-80 wt%, preferably of 5-45 wt%.

12. The biodegradable bio-foam according to any of the preceding claims, wherein the at least one structural component comprises alginate in an amount in the range of 50-95 wt%, preferably of 60-90 wt%.

13. A method for producing a biodegradable bio-foam, comprising:
preparing a structural polymer-solvent mixture by mixing at least one structural component comprising a hydrocolloid and a solvent;
preparing a pre-foaming mixture by mixing the structural polymer-solvent mixture with one or more additives comprising at least one biodegradable and/or recyclable filler;
heating at least one of the pre-foaming mixture and the structural polymer-solvent mixture to a temperature in the range of 30-70°C;
preparing a foaming mixture by adding to the pre-foaming mixture means of inducing at least one of mechanical and chemical foaming such as a foaming agent, a foam stabilizing agent, and mechanical stirring;
preparing a gelling mixture by providing at least one gelation-initiating agent to the foaming mixture;
setting the foam in a mold;
drying the foam; wherein
drying the foam comprises a dry phase and the remaining method comprises a wet phase.

14. The method according to claim 13, wherein the one or more additives comprise at least two biodegradable and/or recyclable fillers comprising CaCOs and cellulose nano-fibrils.

15. The method according to any of the preceding claims 13 or 14:
wherein the solvent is water;
and wherein the heating of at least one of the pre-foaming mixture and structural polymer-solvent mixture is conducted by pre-heating the solvent to 35-75°C before it is introduced;
wherein the at least one structural component of the structural polymer-solvent mixture is selected from the group comprising alginate, Na-alginate, K-alginate, Ca-alginate, and alginic acid.

16. The method according to any of the preceding claims 13-15:
wherein preparing a pre-foaming mixture further includes at least one of:
adding at least one additional structural component wherein each additional structural component is selected from the group comprising alginate, agar, carrageenan, cellulose, cellulose nano-fibrils, pectin, guar gum, xanthan gum, gelatin, chitin, chitosan, and fucoidan; and
adding at least one additional biodegradable and/or recyclable filler selected from the group comprising chitosan and chitin.

17. A method according to any of the preceding claims 13-16 for producing a biodegradable bio-foam with open cells comprising:
adding hydrogen peroxide together with the stabilizing agent; and
adding a yeast mixture to the prepared gelling mixture and before transferring the gelling mixture to a mold.

18. The method according to any of the preceding claims 13-17, comprising adding at least one additional structural component to the pre-foaming mixture.

19. The method according to any of claims 13-18 for producing a biodegradable bio-foam according to any one of claims 1-12.

20. An object comprising the biodegradable bio-foam according to any of the claims 1-12 or 19 wherein the object is selected from the group comprising a furniture padding, a shoe padding, a seat padding, a headset padding, a microphone padding, a material for sound isolation, and a car seat padding.
